# EUROPÄISCHE PATENTSCHRIFT

(11) **EP 4 013 933 B1**
(45) Veröffentlichungstag und Bekanntmachung des Hinweises auf die Patenterteilung: **31.01.2024**
(21) Anmeldenummer: 19769994.5
(22) Anmeldetag: 27.08.2019
(51) Int. Cl.: E05F 15/43, E05F 15/40, E05F 15/665, E05F 15/668, G01V 8/10, G01V 8/20

(54) **VERFAHREN ZUM BESTIMMEN DER TORPOSITION BEI EINER TORANLAGE**
METHOD FOR DETERMINING THE DOOR POSITION IN A DOOR SYSTEM
PROCÉDÉ DE DÉTERMINATION DE LA POSITION D'UNE PORTE DANS UN SYSTÈME DE PORTE

(43) Veröffentlichungstag der Anmeldung: 22.06.2022
(73) Patentinhaber: Marantec Marienfeld GmbH & Co. KG, 33428 Harsewinkel/Marienfeld (DE)
(72) Erfinder: HÖRMANN, Michael, 33790 Halle / Westfalen (DE); HORNSCHUH, Marc, 49326 Melle (DE); HELLWEG, Marc, 33659 Bielefeld (DE)
(74) Vertreter: Laufhütte, Dieter
(86) Internationale Anmeldenummer: PCT/EP2019/072855
(87) Internationale Veröffentlichungsnummer: WO 2021/037345

(56) Entgegenhaltungen:
- EP-A1- 2 586 959
- EP-A2- 1 653 035
- DE-A1- 19 739 543
- DE-A1-102011 102 232
- DE-B3-102010 017 398
- DE-U1-202014 101 131

## Beschreibung

Die vorliegende Erfindung betrifft ein Verfahren zum Bestimmen der Torposition einer Toranlage, beispielsweise ein Garagentor, eine Industrietoranlage oder dergleichen, bei der zur Absicherung des Verfahrwegs des Tors mindestens ein Sensorelement zum Einsatz kommt, das dazu ausgelegt ist, einen freien Weg für das Tor sicherzustellen. Als Sensorelement kommt bspw. eine Lichtschranke, ein Näherungsschalter oder ein mechanischer Taster in Frage.

Aus dem Stand der Technik ist das Problem bekannt, dass nach einem Stromausfall oder einer erstmaligen Inbetriebnahme der Toranlage nach einem Zurücksetzen der Steuereinheit, es nicht mehr genau klar ist, an welcher Position sich das Tor befindet. Diese Information ist aber für ein geregeltes Verfahren des Tores unerlässlich, da es ansonsten zu Schäden an der Toranlage kommen kann.

Nach dem Stand der Technik sind derzeit Absolutwertgeber vorgesehen, die über ein zusätzliches Getriebe an den das Tor verfahrenden Motor angebunden sind. Weiter ist bekannt, dass sich die Kosten für das zusätzliche Getriebe einsparen lassen können, wenn man einen Inkrementalgeber verwendet, so dass man direkt die Drehbewegung der Welle auswerten kann.

Aber auch hier ist es nachteilhaft, dass nach einem Stromausfall die Torposition der Torsteuerung nicht mehr bekannt ist. Da diese Sensoren die Position nur durch Zählen der Impulse bei Bewegung des Tores in Bezug auf die letzte bekannte Position ermitteln, benötigen diese Sensoren einen Referenzpunkt, der auf sichere Art und Weise und ohne ein zu weites Öffnen des Tores angefahren werden kann.

Die DE 10 2011 102232 A1 und die DE 20 2014 101131 U1 offenbaren jeweils ein Verfahren zum Bestimmen der Torposition bei einer Toranlage.

Es ist demnach das Ziel der vorliegenden Erfindung, die Positionsbestimmung eines Torelements zu vereinfachen, so dass auf eine automatisierte Art und Weise das Tor in die Lage versetzt wird, die exakte Torposition zu bestimmen. Dies kann insbesondere bei einer Initialisierung der Torsteuerung, wie sie bspw. nach einem Stromausfall vonnöten ist, von Vorteil sein.

Dies gelingt mit dem erfindungsgemäßen Verfahren nach Anspruch 1.

Hierin wird ein Verfahren zum Bestimmen der Torposition bei einer Toranlage beschrieben. Die Toranlage weist dabei eine Laufschiene zum Führen eines verfahrbaren Torelements sowie ein Sensorelement zum Detektieren eines freien Verfahrwegs des Torelements auf. Das Verfahren umfasst dabei die Schritte eines Erfassen des Zustands des mindestens einen Sensorelements, der entweder vom Torelement frei oder vom Torelement bedeckt einnehmen kann, wobei bei einem Zustandswechsel des Sensorelements die Anordnungsposition des Sensorelements mit dem Torelement übereinstimmt und eine Torsteuerung unter Zuhilfenahme dieser Information die Torposition festlegt.

Demnach ist es also nach dem erfindungsgemäßen Verfahren möglich, die Position des Sensorelements für eine Referenzierung bei der Positionsbestimmung des Tores bzw. der Torunterkante zu verwenden, wie im Nachfolgenden anhand eines Beispiels für das Sensorelement mit einer Lichtschranke gezeigt wird.

Die Steuereinheit wird nach einem Stromausfall den Zustand des Lichtschrankenelements erfassen und anhand des erfassten Zustands entscheiden, in welche Richtung das Tor zu verfahren ist.

Gibt das Lichtschrankenelement nämlich einen Zustand aus, der ein nicht unterbrochenes Lichtsignal anzeigt, durchbricht also das Tor nicht die Lichtschranke, kann das Torelement durch ein gezieltes Verfahren in die Lichtschranke in seiner Position bestimmt werden. Da die Position der Lichtschranke in der Steuereinheit hinterlegt ist, ist bei einem Zustandswechsel der Lichtschranke eine Positionsbestimmung möglich. Dadurch wird also der Steuereinheit bekannt gemacht, wo sich die Torunterkante genau befindet. Auf Grundlage dieser Informationen kann dann das weitere Verfahren des Tores in Abhängigkeit der Torposition erfolgen. So ist bspw. möglich, dass kurz vor einem Aufsetzen einer Torunterkante auf dem Boden, der Antrieb des Tores verringert wird, um die mechanischen Belastungen zu minimieren. Selbstverständlich gilt dies entsprechend für das Erreichen der geöffneten Position des Tores, da es auch hier von Vorteil ist, den Antrieb des Tores kurz vor Erreichen der maximal offenen Position zu vermindern.

Dem Fachmann ist klar, dass analoge Überlegungen auch für eine andere Ausgestaltung des Sensorelements, bspw. in Form eines Näherungsschalters oder eines mechanischen Tasters, gültig sind.

Nach einer Fortbildung des Verfahrens wird dann, wenn der Zustand des Sensorelements frei ist, das Torelement so lange in Schließrichtung verfahren, bis der Zustand des Sensorelements wechselt, oder dann, wenn der Zustand des Sensorelements bedeckt ist, das Torelement so lange in Öffnungsrichtung verfahren, bis der Zustand des Sensorelements wechselt, und beim Wechsel des Zustands die Anordnungsposition des Sensorelements mit dem Torelement übereinstimmt und eine Torsteuerung auf Grundlage dieser Information die Torposition festlegt.

So kann durch eine bspw. vom Torblatt abgedeckte Lichtschranke ein Flankensignal erzeugt werden, wenn das Torblatt die Lichtschranke freigibt. Auch ist bspw. möglich, ein Flankensignal zu erzeugen, wenn das Torblatt in eine freie Lichtschranke verfahren wird. Diesen Punkt kann man dann als Referenzpunkt verwenden, so dass eine Torsteuerung die Position des Torelement, insbesondere einer Torunterkante festlegen kann. Natürlich ist die erläuterte Systematik ebenfalls auf jede Art von Sensorelement anwendbar, so dass sich hieraus keine Einschränkungen für die Anwendbarkeit der Erfindung ergeben.

Nach einer weiteren optionalen Fortbildung kann vorgesehen sein, die Toranlage über ein erstes Sensorelement und ein zweites Sensorelement verfügt, wobei bei einem normalen Schließvorgang der Toranlage das zweite Sensorelement seinen Zustand vor dem ersten Sensorelement von frei nach bedeckt wechselt, und zur Bestimmung der Torposition dann, wenn das erste und das zweite Sensorelement frei sind, das Torelement so lange in Schließrichtung verfahren wird, bis der Zustand des zweiten Sensorelements wechselt, und/oder dann, wenn das erste und das zweite Sensorelement bedeckt sind, das Torelement so lange in Öffnungsrichtung verfahren wird, bis der Zustand des ersten Sensorelements wechselt, und/oder dann, wenn das erste Sensorelement frei ist und das zweite Sensorelement bedeckt ist, das Torelement so lange in Schließrichtung verfahren wird, bis der Zustand des ersten Sensorelements wechselt, und/oder das Torelement so lange in Öffnungsrichtung verfahren wird, bis der Zustand des zweiten Sensorelements wechselt.

Vorzugsweise kann vorgesehen sein, dass das mindestens eine Sensorelement ein Lichtschrankenelement, insbesondere eine Reflex- oder Durchgangslichtschranke, ein Näherungsschalter oder ein mechanischer Taster ist.

Die Erfindung ist dabei nicht durch die Art des Sensorelements beschränkt, sondern umfasst jedes zur Ausübung des Erfindungsgedankens heranziehbares Sensorelement, das eine Annäherung eines Torelements erfassen kann.

Weiter kann nach der Erfindung vorgesehen sein, dass das mindestens eine Torelement die Ober- oder Unterkante eines Tores, eine Führungsrolle des Tores oder ein an dem Tor angebrachtes Element, insbesondere ein Blech oder eine Schraube, ist.

Die Position des Tores kann dabei anhand einer Vielzahl von Torelementen definiert werden. Es ist nicht zwingend erforderlich auf eine Unterkante eines Tores abzustellen, da auch eine Führungsrolle oder ein anderes an dem Tor dauerhaft befestigtes Element eine definierte Position des Tores angibt.

Nach einer optionalen Fortbildung der Erfindung kann vorgesehen sein, dass die durch einen Zustandswechsel des Sensorelements festgelegte Torposition dazu genutzt wird, eine Referenzposition des Tores in einer Torsteuerung zu validieren oder zu erfassen.

So kann nach der Erfindung das Verfahren nicht zu einer bloßen Positionsdetektion herangezogen werden, sondern zum Validieren der Torposition in einer Referenzposition. Die Steuerung kann so sicherstellen, dass der von ihr berechnete Sollzustand des Tores mit dem tatsächlichen Ist-Zustand übereinstimmt. Sollte dies nicht der Fall sein, können entsprechende Gegenmaßnahmen eingeleitet werden, damit eine Abweichung von Soll- zu Ist-Zustand eliminiert wird. Das gelegentliche oder periodische Überprüfen der Genauigkeit der Torsteuerung trägt maßgeblich zu einer besseren Torsteuerung und einer Fehlerminimierung bei.

Weiter kann in vorteilhafter Weise nach der Erfindung vorgesehen sein, dass die erfasste Torposition für einen Initialisierungsvorgang einer Torsteuerung herangezogen wird, insbesondere nach einem Stromausfall der Torsteuerung.

Das Bestimmen einer Referenzposition ist insbesondere erforderlich, wenn eine Initialisierung der Torsteuerung erforderlich ist. Typischerweise ist der Torsteuerung die aktuelle Torposition bekannt, wobei diese Information nach einem Stromausfall oder bei der erstmaligen Inbetriebnahme nicht mehr bekannt ist bzw. nicht bekannt sein kann.

Von daher ist das vorliegende Verfahren besonders hier von Vorteil, da kein Fachpersonal für das Hochfahren (bzw. den Initialisierungsvorgang) der Torsteuerung vonnöten ist. Durch das automatische Erfassen der Torposition an einer Referenzposition erlangt die Torsteuerung Kenntnis über die tatsächliche Position des Tores und kann die Steuerung entsprechend einstellen.

Erfindungsgemäß ist vorgesehen, dass für eine besonders exakte Bestimmung der Torposition der Zustandswechsel des Sensorelements durch entsprechendes Hin- und Herfahren wiederholt durchgeführt wird und für die Bestimmung der Torposition ein Mittelwert der bei jedem Zustandswechsel erhaltenen Torposition herangezogen wird.

Dadurch erhält man eine genauere Torposition, so dass sich das Tor insgesamt mit einer größeren Zuverlässigkeit steuern lassen kann.

Erfindungsgemäß ist vorgesehen, dass der Zustandswechsel des Sensorelements durch entsprechendes Hin- und Herfahren wiederholt durchgeführt wird und dies für unterschiedliche Verfahrgeschwindigkeiten des Tores, so dass die jeweiligen Zustandswechsel nicht alle mit derselben Geschwindigkeit hervorgerufen worden sind.

Auch dies ergibt eine bessere Bestimmung der Torposition, da diese nun nicht mehr nur mittels einer bestimmten Verfahrgeschwindigkeit bestimmt wird, sondern mehrere Verfahrgeschwindigkeiten genutzt worden sind.

Erfindungsgemäß ist vorgesehen, dass die mehreren Zustandswechsel bei unterschiedlichen Verfahrgeschwindigkeiten des Tores zusammen mit einer zugehörigen Verfahrgeschwindigkeit abgespeichert werden, um eine Datenbasis zu erzeugen, die es ermöglicht, eine Totzeit des Wegemesssystems des Tores abzuschätzen und zukünftige Zustandswechsel exakter erfassen zu können.

So kann dann unter Heranziehung eines entsprechenden Wertes aus der Datenbasis, der mit der tatsächlichen Verfahrgeschwindigkeit übereinstimmt oder dieser nahe kommt, die Totzeit des Wegemesssystems abgeschätzt werden und bei der Bestimmung der Torposition berücksichtigt werden. Dies führt ebenfalls zu einer genaueren Bestimmung der Torposition, da die Datenbasis für mehrere Geschwindigkeiten hinterlegte Daten in Bezug auf die Totzeit des Systems aufweist.

Weitere Merkmale, Vorteile und Einzelheiten der Erfindung werden anhand der nachfolgenden Figurenbeschreibung ersichtlich. Dabei zeigen:
- Fig. 1:: eine Teilansicht einer Toranlage mit einer Laufschiene und einem darin geführten Torelement,
- Fig. 2:: eine Teilansicht einer Toranlage einem geschlossenen Zustand,
- Fig. 3:: eine Querschnittsansicht eines zweites Ausführungsbeispiel der Erfindung,
- Fig. 4:: eine Querschnittsansicht eines modifizierten zweites Ausführungsbeispiel der Erfindung,
- Fig. 5:: eine Querschnittsansicht eines dritten Ausführungsbeispiel der Erfindung,
- Fig. 8:: ein Signalmuster der Sensorelemente nach dem dritten Ausführungsbeispiel

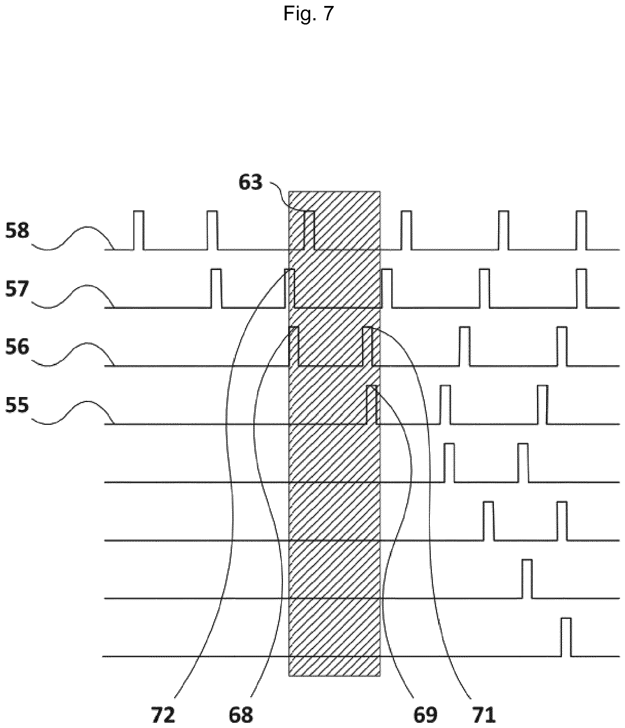

- Fig. 7:: die Darstellung eines Signalmusters sowie eines Untersuchungsbereichs,

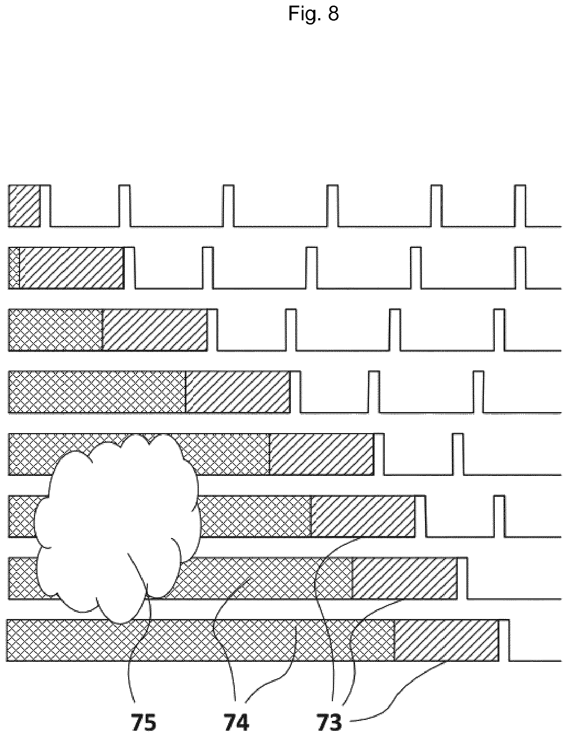

- Fig. 8:: die Darstellung eines Signalmusters bei einem unterhalb der Torkante vorhandenen Objekt,

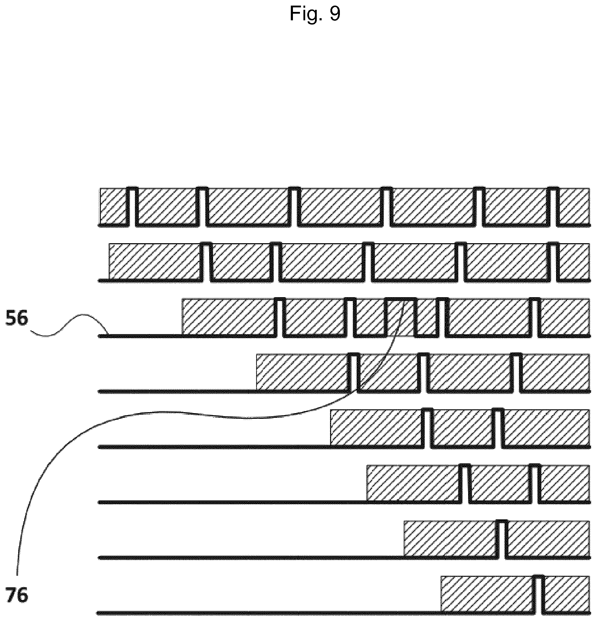

- Fig. 9:: die Darstellung eines Signalmusters bei einem unplausiblen Signalmuster oberhalb der unteren Torkante,

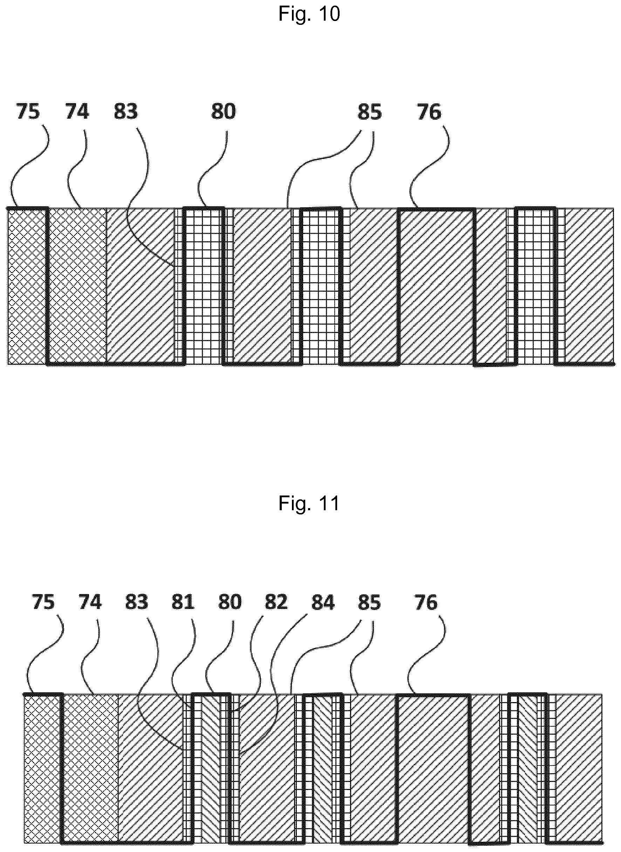

- Fig. 10:: die Darstellung eines Signalverlaufs eines Sensorelements mit zugehörigen Toleranzintervallen,
- Fig. 11:: die Darstellung eines Signalverlaufs eines Sensorelements mit zugehörigen Toleranzintervallen für eine Mindestbreite von Signalen, und

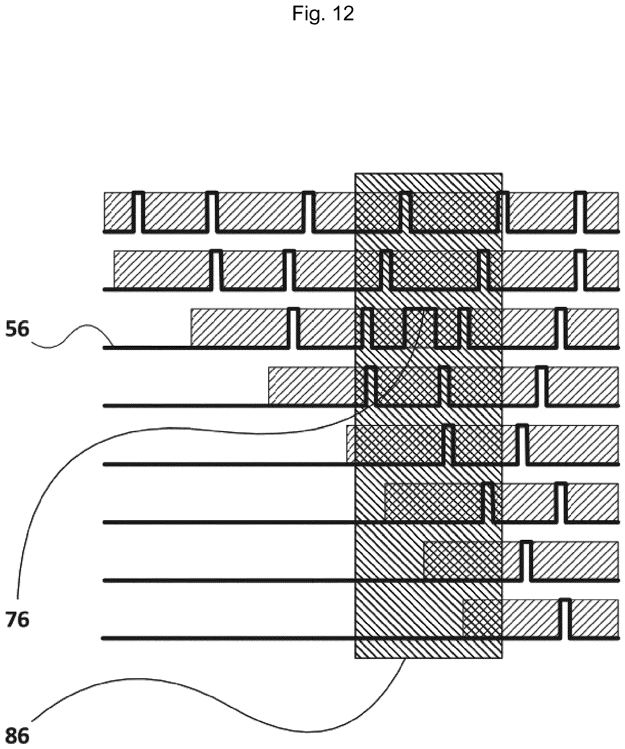

- Fig. 12:: die Darstellung eines Signalmusters bei Auftreffen der Torkante auf ein unerwartetes Hindernis.

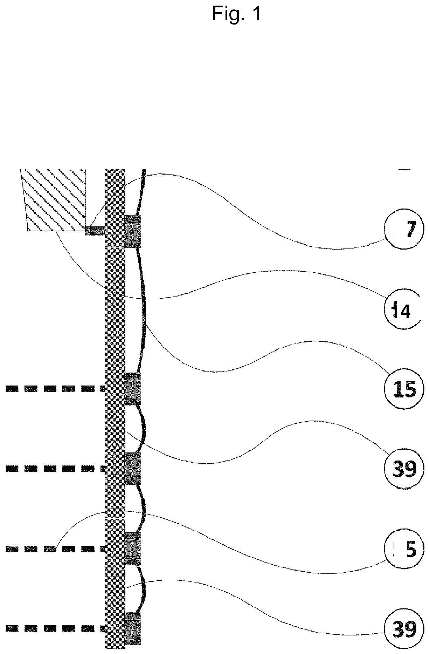

Fig. 1 zeigt eine Teilansicht einer erfindungsgemäßen Toranlage. Die Toranlage besitzt dabei eine Laufschiene 39, die in der Darstellung nach der Fig. 1 auf ihrer linken Seite ein Torsegment 50 (auch Torelement) führt. Die Führung des Torsegments 50 kann dabei in der Laufschiene 39 über Laufrollen 1 erfolgen, die in einem Profil der Laufschiene 39 aufgenommen sind. Auf der von dem Torsegment 50 abgewandten Seite der Laufschiene 39 sind mehrere einzelne Lichtschrankenelemente 10 angeordnet, die einen Lichtstrahl 5, 7 auf der zu dem Torsegment 50 zugewandten Seite der Laufschiene 39 abgeben. Die mehreren Lichtschrankenelemente 10 sind dabei mit einem Kabel 15 miteinander verbunden, um jedes Lichtschrankenelement 10 mit Energie zu versorgen und, bei Bedarf, eine Datenleitung zu einer Steuereinheit zur Verfügung zu stellen.

In Fig. 1 erkennt man ferner, dass die Torunterkante 14 des verfahrbaren Torsegments 50 den vom Lichtschrankenelement abgegebenen Lichtstrahl 57 unterbricht.

Ist es nun erforderlich, die Position der Torunterkante 14 und damit der verfahrbaren Torelemente zu bestimmen, kann nach dem erfindungsgemäßen Verfahren vorgesehen sein, die Torunterkante so zu verfahren, dass es zu einem Zustandswechsel eines Lichtschrankenelements kommt. Dieser Zustandswechsel referenziert die aktuelle Position auf dasjenige Lichtschrankenelement, deren Zustand gewechselt ist.

Auf Grundlage dieser Informationen ist es dann möglich, die Position der Torunterkante 14 festzulegen und ein Verfahren des Tores in Abhängigkeit der tatsächlichen Torposition vorzunehmen.

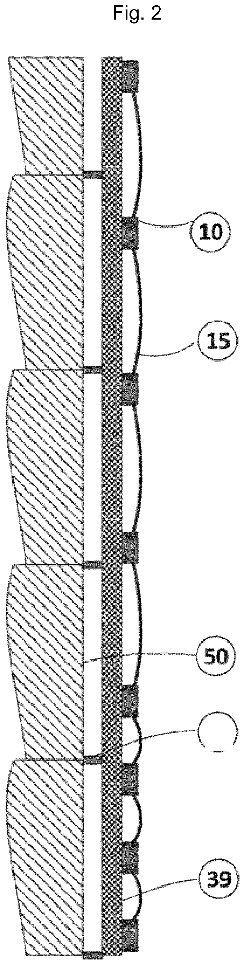

Fig. 2 zeigt eine weitere Ansicht der Toranlage. In der Darstellung befindet sich das Tor in einem geschlossen Zustand. Die einzelnen Torsegmente 50 unterbrechen die von den mehreren Lichtschrankenelementen 10 abgegebenen Lichtsignale (nicht dargestellt). Dabei sind die Torsegmente mit einer Aufhängung in der zugehörigen Laufschiene 39 aufgenommen. Zudem erkennt man ein Kabel 15, das die Lichtschrankenelemente miteinander verbindet.

In einer solchen Position ist es nun ebenfalls möglich, die Torposition nach einem Stromausfall oder dergleichen zu bestimmen. Da die Steuereinheit erkennt, dass sämtliche Lichtschrankenelemente 10 ein Lichtsignal aussenden, das unterbrochen ist, wird das Tor in Öffnungsrichtung verfahren. Dabei wird nach einiger Zeit der Zustand der untersten Lichtschranke wechseln, so dass die Position der Torunterkante festgelegt werden kann.

Natürlich ist auch möglich, dass der Steuereinheit nur die Position einer einzigen oder einiger weniger Lichtschrankenelemente bekannt ist, so dass das Tor solange verfahren werden muss, bis ein solches in seiner Position der Steuereinheit bekanntes Lichtschrankenelement seinen Zustand wechselt.

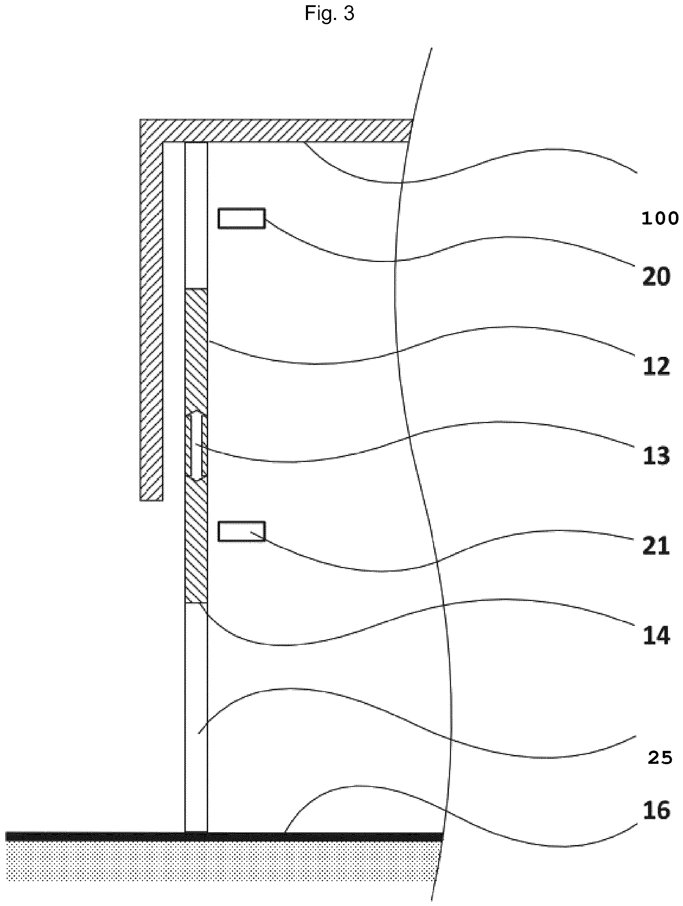

Fig. 3 zeigt eine Querschnittsansicht eines Tores 12 in einem Gebäude 100, das nach der Erfindung betrieben wird. Über diesen Sensor 20, 21 bekommt die Steuerung die Information ob das Tor 12 im Bereich des Sensors 20, 21 steht, oder nicht. Wenn das Torblatt den Bereich des Sensors 20, 21 verlässt, oder aber vor den Sensor 20, 21 fährt wechselt das Sensorsignal seinen Zustand entsprechend. Diese Flanke selbst stellt einen Referenzpunkt für den Sensor 20, 21 dar.

Über die Information ob das Torblatt vor dem Sensor 20, 21 steht oder nicht ist der Steuerung bekannt in welche Richtung 13 das Tor 12 verfahren werden muss um einen Zustandswechsel des Sensorsignals zu erreichen. Da der Steuerung bekannt ist, ob die Kante 14 oberhalb oder unterhalb des Sensors 20, 21 ist besteht nicht die Gefahr, dass es durch die Referenzfahrt zu einer mechanischen Beschädigung des Tores 12 durch ein Überfahren der oberen oder unteren maximal zulässigen Torposition kommt. Somit kann dieser Referenzpunkt von dem Tor selbstständig ohne Überwachung durch eine Fachkraft angefahren werden. Falls die Torposition aus Personenschutzgründen benötigt wird, kann hier auch eine Totmannfahrt durchgeführt werden, wobei das Tor 12 dann ein Verfahren in die nicht sichere Richtung (nach unten in Richtung der Schließposition 16 des Tores entlang des möglichen Verfahrwegs 25 verhindert werden kann.

Die beschriebene Anwendung ist unabhängig von der verwendeten Sensortechnologie umsetzbar. Beispielsweise könnte dies eine ergänzende Anwendung von Lichtschranken oder Lichtgittern sein, welche durch das Torblatt oder das Tor abgedeckt werden. Alternativ sind auch alle anderen Sensortypen denkbar, welche in der Lage sind das Torblatt oder das Tor zu detektieren.

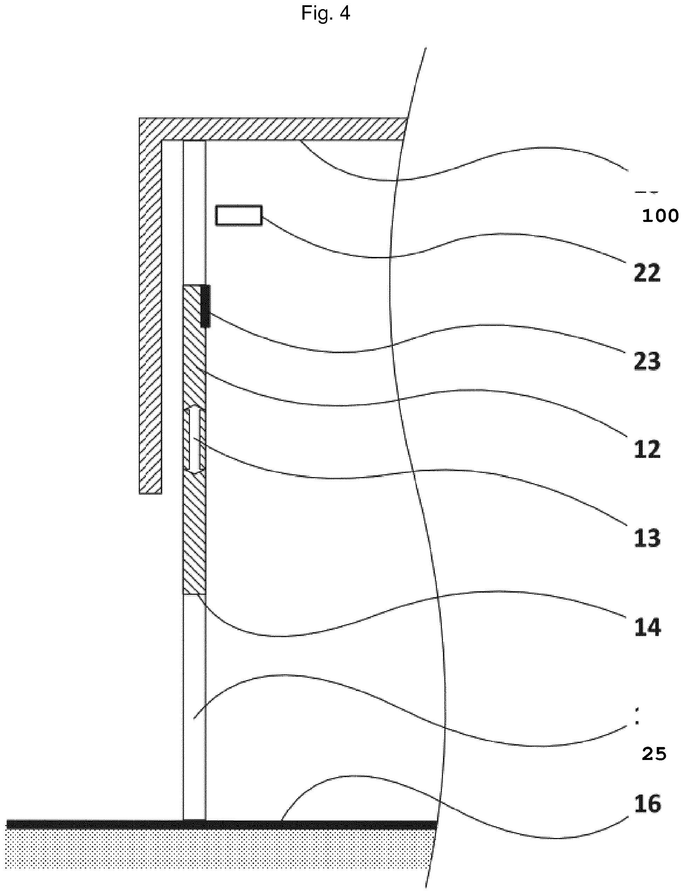

Fig. 4 zeigt eine Modifikation der vorausgehenden Figur, bei der der Sensor 22 mit einer korrespondierenden Sensorfläche 23 verbaut ist, so dass dieser vor dem Erreichen der oberen, mechanisch begründeten Endposition des Tores 12 aktiviert wird und auch bis mindestens zum Erreichen der mechanischen Endposition aktiviert bleibt.

Im Normalbetrieb wird beim Hochfahren des Tores spätestens beim Aktivieren des Sensors 22 mit der Sensorfläche 23 zum einem der Schleichvorgang eingeleitet, zum anderen kann dort auch die Referenzierung und ggf. der Positionsabgleich erfolgen.

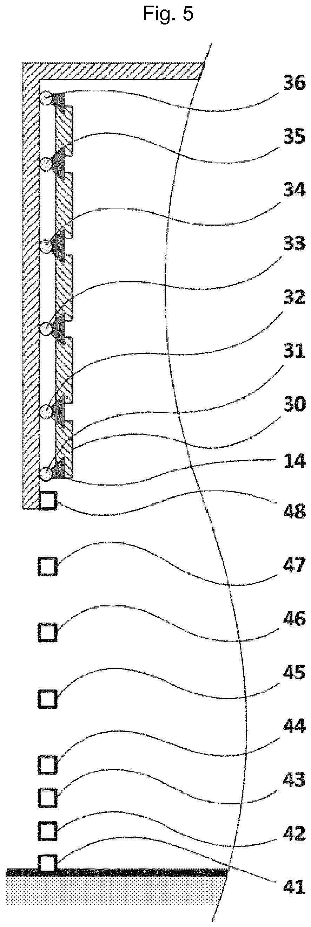

Fig. 5 offenbart eine weitere Anordnung, welche die Verwendung mit einem Lichtgitter betrifft. Das Lichtgitter ist dabei in den Laufweg des Tores eingebracht. Die an dem Tor 30 montierten Laufrollen 31 bis 36 unterbrechen hierbei beim Zufahren des Tores die Lichtschrankenelemente 41 bis 48. Hierbei kann die Anordnung so gewählt werden, dass die einzelnen Lichtschrankenelemente 41 bis 48 durch die Laufrollen unterbrochen werden, es ist aber auch denkbar, dass sie durch die Halterungen der Rollen oder durch die Torsegmente 30 selbst unterbrochen werden.

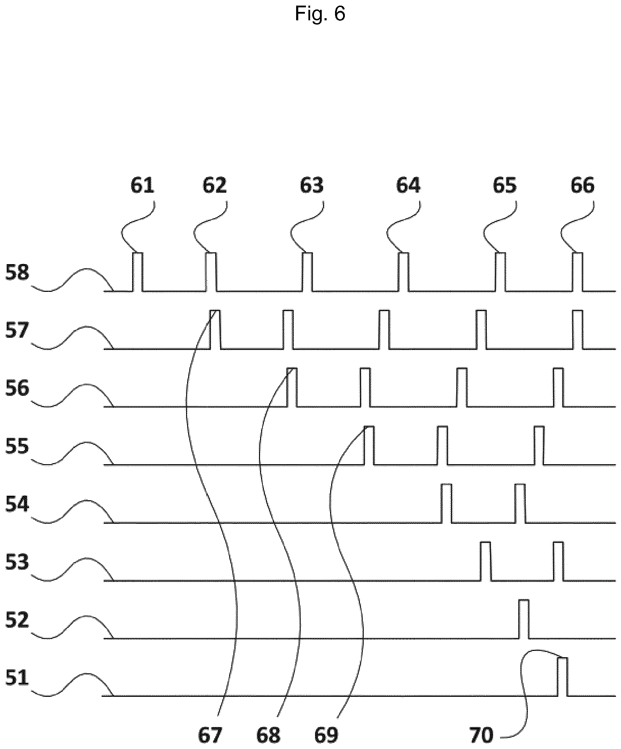

Hierbei wird ein Signalmuster nach Fig. 6 erzeugt. Die horizontalen Linien 51 bis 58 zeigen die zeitsynchronen Ausgänge der Lichtschranken 41 bis 48 nach, wobei der horizontale Graph 51 den Signalverlauf der Lichtschranke 41, der Graph 52 den der Lichtschranke 42 usw. bis zum Graph 58, der den Signalverlauf der Lichtschranke 48 wiederspielgelt. Die Signalverläufe sind - je nach Messverfahren - zeit oder wegsynchron dargestellt, so dass vertikal die Signale zu einer bestimmten Zeit t0 oder einer Wegstrecke s0 verglichen werden können.

Das erste Signal 61 wird durch das Unterbrechen des Lichtschrankenelementes 48 durch die Rolle 31 erzeugt, danach unterbricht diese Rolle 31 das nächste Lichtschrankenelement 47 und erzeugt den Impuls 62 auf der Signalspur 57. Kurz danach unterbricht die zweite Rolle 32 das erste Lichtschrankenelement 48 und erzeugt den Impuls 67 auf Signalspur 57.

Die Entstehung jedes der obigen Impulse wird exakt zeit- oder wegdiskret protokolliert.

Mit Hilfe dieser Protokollierung kann nun sehr exakt eine Referenzierung vorgenommen werden. Hierzu wird das Tor in einer unbekannten Position langsam in die sichere obere Position gefahren. Es wird nun ein Signalmuster des schraffierten Bereiches, wie in der Fig 7 dargestellt, erzeugt und zwar von rechts nach links (dem Auffahren). Hierbei dient zur Referenzierung die Ermittlung der Torunterkante. Dies wird hierdurch realisiert, dass die Spuren 51 bis 58 zeitdiskret miteinander verglichen werden und hierdurch der untersten Impulse 69 auf dem Signalverlauf 55 erkannt wird. Die Rolle erzeugt einige Zeit später bzw. nach Zurücklegen eines bestimmten Wegs den Impuls 68, nun auf dem Signalverlauf 56. Nach dem Überfahren dieses Impulses kann die exakte Position des Tores durch Vergleich mit den gespeicherten Signalverläufen errechnet und das Tor wieder schnell verfahren werden.

In einer weiteren Ausprägung können die zwischen den Impuls 69 und 68 erkannten Impulse 71 (Rolle 2 an Sensor 6), 63 und 72 (Rolle 2 an Sensor 7) ebenfalls zur Validierung herangezogen werden.

In einer weiteren Ausprägung können neben dem Zustand jedes Impulses ebenfalls der exakte Anstieg wie auch der exakte Abfall des Impulses zur Validierung der Position verwendet werden.

Durch diese Erweiterung erreicht man im vorliegenden Beispiel eine mehrfach sichere Validierung der Torposition.

Da mit den obigen Verfahren mehrfach valide die Torunterkannte errechnet werden kann, kann es selbst bei schließendem Tor erlaubt werden, Objekte 75 im Schließweg zu tolerieren, sofern sich diese innerhalb eines Toleranzbereichs 74 bewegen, der sich durch den Aufschlag 73 zur errechneten Torunterkannte 14 liegt. Ein Beispiel hierfür ist in Fig. 8 dargestellt. Ist das unter dem Tor befindliche Objekt also ausreichend weit von der Torunterkante entfernt, hat dies nicht unbedingt einen Einfluss auf die nach unten gerichtete Verfahrgeschwindigkeit des Tores.

In einer weiteren Ausprägung kann die Geschwindigkeit der Tores in Abhängigkeit zur der Entfernung zum Objekt 75 reduziert werden. Dies kann bspw. durch das Absenken auf ein niedriges Geschwindigkeitsniveau oder auch durch eine proportionale Geschwindigkeitsabsenkung bis kurz vor einem Auftreffen der Torunterkante 14 auf das Objekt 75 durchgeführt werden. In einem konkreten Anwendungsfall würde bspw. das Tor bis 100 cm vor dem Objekt 75 mit voller Geschwindigkeit fahren und proportional seine Geschwindigkeit immer weiter senken, bis die Torunterkante bspw. 10 cm vor dem Objekt 75 stehen bleibt. Dem Fachmann ist klar, dass die angegebenen Distanzwerte je nach Anwendungsart und Ausgestaltung des Tores anzusetzen sind, für die vorliegende Erfindung also nicht einschränkend auszulegen sind.

Ebenfalls kann mit diesem Verfahren auch der Bereich oberhalb der Torunterkante überwacht werden, wie in Fig. 9 gezeigt. Dies ist nach dem Stand der Technik nur sehr schwer möglich und kann mit dem vorgeschlagenen Verfahren durchgeführt werden. Hierzu wird überprüft, ob das Signalmuster der einzelnen Signalformen 51 bis 58 vor der Torunterkante (wie oben beschrieben) und auch hinter der Torunterkante 14 plausibel ist. Tritt zum Beispiel, wie in Fig. 9 dargestellt ein unerwartetes Signal 76 auf der Signalform 56 auf, wird das Tor sofort gestoppt.

Fig. 10 zeigt einen Signalverlauf eines Sensorelements. Um die Robustheit der Überwachung zu erhöhen, wird um die vorausberechneten Impulse 80 ein Toleranzbereich 83 gelegt, innerhalb dessen der Impuls vorkommen muss. Dieser Bereich darf nicht zu groß (sonst können keine Hindernisse erkannt werden) aber auch nicht zu klein (sonst kommt es oft zu Störungen durch Messungenauigkeiten) gewählt werden. In dem Überwachungsbereichen zwischen den Impulsen 85 wird nach dem Entdecken eines ungültigen Impulses (also eines Hindernisses) 76 der Torantrieb sofort gestoppt. Im Bereich vor dem Tor 74 können unerwartete Signale 75 geduldet werden.

In einer weiteren Ausprägung, dargestellt in Fig. 11, kann auch der Bereich der Impulse überwacht werden, denn auch der Impuls müsste eine gewisse Mindestbreite aufweisen. Ist diese nicht gegeben, ist von einem Fehler des Sensors auszugehen, der ebenfalls zu einem Notstopp führt. Hierzu werden Tore 83 und 84 gebildet, in denen der Signalform von einem Zustand den anderen Zustand erreichen muss.

In der in Fig. 12 dargestellten Ausführung wird mindestens ein Überwachungsbereich nach der Torkante 86 definiert, in dem unerwartete Impulse 76 die von einem Hindernis ausgelöst werden, zur Notabschaltung des Torantriebs führen.

Hierdurch kann einerseits ein robuster Betrieb realisiert werden, andererseits kann hiermit eine Überwachung an gefährlichen Einzugsstellen erfolgen, während an anderen Stellen keine Gefahr ausgehen kann.

Die gesamte Erfindung kann sowohl zeit- wie auch wegdiskret realisiert werden. Zu einer wegdiskrekten Realisation wird ein hinreichend genauer Wegmesser (bspw. Inkrementalgeber oder Impulsgeber) benötigt. Bei kostensensitiven Applikationen kann diese Aufgabe auch ein durch einen Zeitgeber mit Einbußen in der Genauigkeit realisiert werden.

Die erste Referenztabelle wird mit der Inbetriebnahme ermittelt und im Speicher der Steuerung nichtflüchtig abgespeichert. Die Ausgänge von Lichtschranken müssen nicht unbedingt wie im Beispiel "High" bei Abdunkelung sein, die Signalform kann auch negiert sein.

### Bezugszeichenliste:

(100) Gebäude
(12) Gesamtes Tor
(13) Verfahrrichtung des Tores
(14) Torunterkante
(25) Möglicher Verfahrweg des Tores
(16) Boden des Gebäudes
(20) Sensor oben
(21) Sensor unten
(22) Aktive Fläche für den Sensor
(23) Aktivierungsfläche für den Sensor 22
(30) Untere Torsektion
(31) Rolle 1
(32) Rolle 2
(33) Rolle 3
(34) Rolle 4
(35) Rolle 5
(36) Rolle 6
(41) Sensor 1
(42) Sensor 2
(43) Sensor 3
(44) Sensor 4
(45) Sensor 5
(46) Sensor 6
(47) Sensor 7
(48) Sensor 8
(51) Signalverlauf von Sensor 1
(52) Signalverlauf von Sensor 2
(53) Signalverlauf von Sensor 3
(54) Signalverlauf von Sensor 4
(55) Signalverlauf von Sensor 5
(56) Signalverlauf von Sensor 6
(57) Signalverlauf von Sensor 7
(58) Signalverlauf von Sensor 8
(61) Signal von Rolle 1 auf Signalverlauf 58 von Sensor 8
(62) Signal von Rolle 2 auf Signalverlauf 58 von Sensor 8
(63) Signal von Rolle 3 auf Signalverlauf 58 von Sensor 8
(64) Signal von Rolle 4 auf Signalverlauf 58 von Sensor 8
(65) Signal von Rolle 5 auf Signalverlauf 58 von Sensor 8
(66) Signal von Rolle 6 auf Signalverlauf 58 von Sensor 8
(67) Signal von Rolle 1 auf Signalverlauf 57 von Sensor 7
(68) Signal von Rolle 2 auf Signalverlauf 56 von Sensor 6
(69) Signal von Rolle 3 auf Signalverlauf 55 von Sensor 5
(70) Signal von Rolle 4 auf Signalverlauf 54 von Sensor 4
(71) Signal von Rolle 2 auf Signalverlauf 56 von Sensor 6
(72) Signal von Rolle 2 auf Signalverlauf 57 von Sensor 7
(73) Sperrbereich vor der Torunterkannte
(74) Akzeptanzbereich vor der Torunterkannte
(75) Hindernis im Verfahrbereich
(76) Hindernis oberhalb der Torunterkante
(80) Vorausberechneter Impuls 1
(81) Toleranzbereich des Impulses 1 steigende Flanke
(82) fallende Flanke des Impulses 1
(83) Toleranzbereich zu Impuls 1
(84) Toleranzbereich des Impulses 1 steigende Flanke
(85) Überwachungsbereich
(86) Überwachungsbereich nach Torkante

## Patentansprüche

1. Verfahren zum Bestimmen der Torposition bei einer Toranlage, die eine Laufschiene zum Führen eines verfahrbaren Torelements sowie ein Sensorelement (10) zum Detektieren eines freien Verfahrwegs des Torelements (50) aufweist, wobei das Verfahren die Schritte umfasst:
Erfassen des Zustands des mindestens einen Sensorelements (10), der entweder vom Torelement (50) frei oder vom Torelement (50) bedeckt einnehmen kann, wobei
bei einem Zustandswechsel des Sensorelements (10) die Anordnungsposition des Sensorelements (10) mit dem Torelement (50) übereinstimmt und eine Torsteuerung unter Zuhilfenahme dieser Information die Torposition festlegt, und
für eine besonders exakte Bestimmung der Torposition der Zustandswechsel des Sensorelements durch entsprechendes Hin- und Herfahren wiederholt durchgeführt wird und für die Bestimmung der Torposition ein Mittelwert der bei jedem Zustandswechsel erhaltenen Torposition herangezogen wird,
**dadurch gekennzeichnet, dass**
der Zustandswechsel des Sensorelements durch entsprechendes Hin- und Herfahren wiederholt durchgeführt wird und dies für unterschiedliche Verfahrgeschwindigkeiten des Tores, so dass die jeweiligen Zustandswechsel nicht alle mit derselben Geschwindigkeit hervorgerufen worden sind, und
die mehreren Zustandswechsel bei unterschiedlichen Verfahrgeschwindigkeiten des Tores zusammen mit einer zugehörigen Verfahrgeschwindigkeit abgespeichert werden, um eine Datenbasis zu erzeugen, die es ermöglicht, eine Totzeit des Wegemesssystems des Tores abzuschätzen und zukünftige Zustandswechsel exakter erfassen zu können.

2. Verfahren nach Anspruch 1, wobei
dann, wenn der Zustand des Sensorelements (10) frei ist, das Torelement (50) so lange in Schließrichtung verfahren wird, bis der Zustand des Sensorelements (10) wechselt, oder
dann, wenn der Zustand des Sensorelements (10) bedeckt ist, das Torelement (50) so lange in Öffnungsrichtung verfahren wird, bis der Zustand des Sensorelements (10) wechselt, und
beim Wechsel des Zustands die Anordnungsposition des Sensorelements (10) mit dem Torelement (50) übereinstimmt und eine Torsteuerung auf Grundlage dieser Information die Torposition festlegt.

3. Verfahren nach einem der Ansprüche 1 oder 2, wobei die Toranlage über ein erstes Sensorelement (10) und ein zweites Sensorelement (10) verfügt, wobei bei einem normalen Schließvorgang der Toranlage das zweite Sensorelement (10) seinen Zustand vor dem ersten Sensorelement (10) von frei nach bedeckt wechselt, und zur Bestimmung der Torposition
dann, wenn das erste und das zweite Sensorelement (10) frei sind, das Torelement (50) so lange in Schließrichtung verfahren wird, bis der Zustand des zweiten Sensorelements (10) wechselt,
dann, wenn das erste und das zweite Sensorelement (10) bedeckt sind, das Torelement (50) so lange in Öffnungsrichtung verfahren wird, bis der Zustand des ersten Sensorelements (10) wechselt, und
dann, wenn das erste Sensorelement (10) frei ist und das zweite Sensorelement (10) bedeckt ist, das Torelement (50) so lange in Schließrichtung verfahren wird, bis der Zustand des ersten Sensorelements (10) wechselt, oder das Torelement (50) so lange in Öffnungsrichtung verfahren wird, bis der Zustand des zweiten Sensorelements (10) wechselt.

4. Verfahren nach einem der vorhergehenden Ansprüche, wobei das mindestens eine Sensorelement ein Lichtschrankenelement, insbesondere eine Reflex- oder Durchgangslichtschranke, ein Näherungsschalter oder ein mechanischer Taster ist.

5. Verfahren nach einem der vorhergehenden Ansprüche, wobei das mindestens eine Torelement die Ober- oder Unterkante eines Tores, eine Führungsrolle des Tores oder ein an dem Tor angebrachtes Element, insbesondere ein Blech oder eine Schraube, ist.

6. Verfahren nach einem der vorhergehenden Ansprüche, wobei in dem Verfahren ferner die durch einen Zustandswechsel des Sensorelements (10) festgelegte Torposition dazu genutzt wird, eine Referenzposition des Tores in einer Torsteuerung zu validieren oder zu erfassen.

7. Verfahren nach einem der vorhergehenden Ansprüche, wobei die erfasste Torposition für einen Initialisierungsvorgang einer Torsteuerung herangezogen wird, insbesondere nach einem Stromausfall der Torsteuerung.

## Claims

1. Method of determining the door position in a door system that has a rail for guiding a travelable door element and a sensor element (10) for detecting a free travel path of the door element (50), wherein the method comprises the steps:
detecting the state of the at least one sensor element (10) that can be adopted either free of the door element (50) or covered by the door element (50), wherein
on a change of state of the sensor element (10), the arrangement position of the sensor element (10) corresponds to the door element (50) and a door control determines the door position on the basis of this information, and
the state change of the sensor element is repeatedly carried out by a corresponding movement to and fro for a particularly exact determination of the door position and when an average value of the door positions obtained on each state change is used for the determination of the door position,
**characterized in that**
the state change of the sensor element is repeatedly carried out by a corresponding moving to and fro, and indeed for different travel speeds of the door, so that the respective state changes have not all been caused at the same speed, and
the plurality of state changes at different travel speeds of the door are stored together with an associated travel speed to generate a database that makes it possible to be able to more exactly estimate a downtime of the distance measurement system of the door and to be able to more exactly detect future state changes.

2. Method in accordance with claim 1, wherein
when the state of the sensor element (10) is free, the door element (50) is traveled for so long in the direction of closing until the state of the sensor element (10) changes; or
when the state of the sensor element (10) is covered, the door element (50) is traveled for so long in the direction of opening until the state of the sensor element (10) changes; and
on a change of state the arrangement position of the sensor element (10) corresponds to the door element (50) and a door control fixes the door position on the basis of this information.

3. Method in accordance with one of the claims 1 or 2, wherein the door system has a first sensor element (10) and a second sensor element (10), wherein, on a normal closing procedure of the door system, the second sensor element (10) changes its state from free to covered sooner than the first sensor element (10); and, for determining the door position,
when the first and second sensor elements (10) are free, the door element (50) is traveled for so long in the direction of closing until the state of the second sensor element (10) changes;
when the first and second elements (10) are covered, the door element (50) is traveled for so long in the direction of opening until the state of the first sensor element (10) changes; and
when the first sensor element (10) is free and the second sensor element (10) is covered, the door element (50) is traveled for so long in the direction of closing until the state of the first sensor element (10) changes or the door element (50) is traveled for so long in the direction of opening until the state of the second sensor element (10) changes.

4. Method in accordance with one of the preceding claims, wherein the at least one sensor element is a light barrier element, in particular a reflected light barrier or a passage light barrier, a proximity switch, or a mechanical feeler.

5. Method in accordance with one of the preceding claims, wherein the at least one door element is the upper edge or lower edge of a door, a guide roller of the door or an element, in particular a metal sheet or a screw, attached to the door.

6. Method in accordance with one of the preceding claims, wherein, in the method, the door position fixed by a state change of the sensor element (10) is used to validate or sense a reference position of the door in the door control.

7. Method in accordance with one of the preceding claims, wherein the detected door position is used for an initialization procedure of a door control, in particular after a power outage of the door control.

## Revendications

1. Procédé de détermination de la position d'une porte dans un système de porte qui présente un rail de roulement destiné à guider un élément de porte déplaçable ainsi qu'un élément détecteur (10) destiné à détecter un chemin de déplacement libre de l'élément de porte (50), le procédé comprenant les étapes consistant à :
détecter l'état de l'au moins un élément détecteur (10), qui peut correspondre soit à dégagé de l'élément de porte (50), soit à recouvert par l'élément de porte (50), dans lequel
lors d'un changement d'état de l'élément détecteur (10), la position d'agencement de l'élément détecteur (10) correspond à l'élément de porte (50) et une commande de porte définit la position de porte à l'aide de cette information, et
pour une détermination particulièrement exacte de la position de porte, le changement d'état de l'élément détecteur est effectué de manière répétée par un mouvement de va-et-vient correspondant et pour la détermination de la position de porte, une valeur moyenne de la position de porte obtenue à chaque changement d'état est prise en compte,
**caractérisé en ce que**
le changement d'état de l'élément détecteur est effectué de manière répétée par un mouvement de va-et-vient correspondant et ceci à différentes vitesses de déplacement de la porte, de telle sorte que les changements d'état respectifs n'ont pas tous été provoqués à la même vitesse, et
les plusieurs changements d'état à différentes vitesses de déplacement de la porte sont enregistrés conjointement avec une vitesse de déplacement associée pour générer une base de données qui permet d'estimer un temps mort du système de mesure de déplacement de la porte et de pouvoir détecter plus exactement de futurs changements d'état.

2. Procédé selon la revendication 1, dans lequel
lorsque l'état de l'élément détecteur (10) est dégagé, l'élément de porte (50) est déplacé dans la direction de fermeture jusqu'à ce que l'état de l'élément détecteur (10) change, ou
lorsque l'état de l'élément détecteur (10) est recouvert, l'élément de porte (50) est déplacé dans la direction d'ouverture jusqu'à ce que l'état de l'élément détecteur (10) change, et
lors d'un changement de l'état, la position d'agencement de l'élément détecteur (10) correspond à l'élément de porte (50) et une commande de porte définit la position de porte sur la base de cette information.

3. Procédé selon l'une des revendications 1 ou 2, dans lequel le système de porte dispose d'un premier élément détecteur (10) et d'un second élément détecteur (10), dans lequel le second élément détecteur (10) change son état de dégagé à recouvert avant le premier élément détecteur (10) lors d'un processus de fermeture normal du système de porte, et, pour la détermination de la position de porte,
lorsque le premier et le second élément détecteur (10) sont dégagés, l'élément de porte (50) est déplacé dans la direction de fermeture jusqu'à ce que l'état du second élément détecteur (10) change,
lorsque le premier et le second élément détecteur (10) sont recouverts, l'élément de porte (50) est déplacé dans la direction d'ouverture jusqu'à ce que l'état du premier élément détecteur (10) change, et
lorsque le premier élément détecteur (10) est dégagé et le second élément détecteur (10) est recouvert, l'élément de porte (50) est déplacé dans la direction de fermeture jusqu'à ce que l'état du premier élément détecteur (10) change, ou l'élément de porte (50) est déplacé dans la direction d'ouverture jusqu'à ce que l'état du second élément détecteur (10) change.

4. Procédé selon l'une des revendications précédentes, dans lequel l'au moins un élément détecteur est un élément de barrière photoélectrique, en particulier une barrière photoélectrique à réflexion ou unidirectionnelle, un interrupteur de proximité ou un palpeur mécanique.

5. Procédé selon l'une des revendications précédentes, dans lequel l'au moins un élément de porte est le bord supérieur ou le bord inférieur d'une porte, un galet de guidage de la porte ou un élément monté sur la porte, en particulier une plaque de métal ou une vis.

6. Procédé selon l'une des revendications précédentes, dans lequel la position de porte définie par un changement d'état de l'élément détecteur (10) est en outre utilisée pour valider ou enregistrer une position de référence de la porte dans une commande de porte.

7. Procédé selon l'une des revendications précédentes, dans lequel la position de porte enregistrée est prise en compte pour un processus d'initialisation d'une commande de porte, en particulier après une panne de courant de la commande de porte.
